**Europäisches Patentamt**

**European Patent Office**

**Office européen des brevets**

(19)

(11) Veröffentlichungsnummer : **0 385 183 B1**

(12) **EUROPÄISCHE PATENTSCHRIFT**

(45) Veröffentlichungstag der Patentschrift :
**19.08.92 Patentblatt 92/34**

(51) Int. Cl.⁵ : **F16D 65/52**

(21) Anmeldenummer : **90102861.3**

(22) Anmeldetag : **14.02.90**

(54) **Selbsttätige mechanische Nachstellvorrichtung für eine als Feststellbremse dienende Innenbacken-Trommelbremse.**

(30) Priorität : **25.02.89 DE 3905951**

(43) Veröffentlichungstag der Anmeldung :
**05.09.90 Patentblatt 90/36**

(45) Bekanntmachung des Hinweises auf die
Patenterteilung :
**19.08.92 Patentblatt 92/34**

(84) Benannte Vertragsstaaten :
**DE ES FR GB IT**

(56) Entgegenhaltungen :
**DE-A- 2 644 575**
**DE-A- 3 032 583**
**US-A- 2 344 933**

(73) Patentinhaber : **VOLKSWAGEN**
**AKTIENGESELLSCHAFT**
**W-3180 Wolfsburg (DE)**

(72) Erfinder : **Timmer, Sebastian**
**Schweizerln 13**
**NL-5644 DK Eindhoven (NL)**
Erfinder : **Stresemann, Werner, Dipl.-Ing.**
**Hinter dem Hagen 24**
**W-3181 Barwedel (DE)**

## Beschreibung

Die Erfindung betrifft eine selbsttätige mechanische Nachstellvorrichtung für eine als Feststellbremse dienende, vorzugsweise in einer Scheibenbremse integrierte Innenbacken-Trommelbremse der im Oberbegriff des Patentanspruchs genannten Art.

Vom Gesetzgeber ist vorgeschrieben, daß ein Kraftfahrzeug nicht nur mit einer - im allgemeinen hydraulisch betätigbaren - Betriebsbremsvorrichtung, sondern auch mit einer - im allgemeinen mechanisch betätigbaren - Feststellbremsvorrichtung ausgerüstet sein muß.

Da es vergleichsweise schwierig ist, ausreichend große Feststellkräfte rein mechanisch an der Bremsscheibe einer Scheibenbremse zur Wirkung zu bringen, ist es üblich, innerhalb der Scheibenbremse, und zwar im trommelförmig ausgebildeten Nabenbereich der Bremsscheibe eine mechanisch betätigbare, als Feststellbremse dienende Innenbacken-Trommelbremse anzuordnen. Obgleich solche integrierten Innenbacken-Trommelbremsen nicht als Betriebsbremse, sondern nur als Feststellbremse wirken, tritt im Laufe der Zeit doch ein gewisser Bremsbelagverschleiß ein, der eine Nachstellung der Feststellbremse erfordert, um deren Funktionsweise sicherzustellen.

Der Erfindung liegt daher die Aufgabe zugrunde, eine selbsttätige mechanische Nachstellvorrichtung der im Oberbegriff des Patentanspruchs genannten Art zu schaffen, mit der einerseits die Feststellbremse bei ihrer erstmaligen Betätigung selbsttätig eingestellt wird und bei der andererseits sich ergebender Belagverschleiß selbsttätig durch Nachstellung ausgeglichen wird.

Diese Aufgabe wird erfindungsgemäß durch die Merkmale des Patentanspruchs gelöst.

Erfindungsgemäß sind also zwei in geschickter Weise aufeinander abgestimmte und miteinander zusammenwirkende Keilglieder vorgesehen, die während eines Betätigungszyklus' der Feststellbremse (Anziehen/Lösen) ggf. eingetretenen Belagverschleiß durch entsprechendes Verlagern der Keile selbsttätig ausgleichen.

Innenbacken-Trommelbremsen, bei denen zur selbsttätigen mechanischen Nachstellung Keilglieder verwendet werden, sind an sich bereits bekannt (z. B. DE-OS 26 44 575, DE-OS 30 32 583). Diese bekannten Innenbacken-Trommelbremsen sind jedoch keine - mechanisch betätigbare - reinen Feststellbremsen, sondern in erster Linie - hydraulisch betätigbare - Betriebsbremsen, bei denen jeweils parallel zum mechanischen Bremshebel der Feststellbremse ein hydraulischer Radbremszylinder der Betriebsbremse vorgesehen ist. Ggf. eingetretener Belagverschleiß wird dabei immer dann durch das federkraftbeaufschlagte Keilglied ausgeglichen, wenn die beiden Bremsbacken durch den hydraulischen Radbremszylinder der Betriebsbremse auseinandergespreizt werden und dadurch die Verspannung des Keilgliedes mit Druckstange und Bremsbacke vorübergehend aufgehoben wird.

Anhand eines in der Zeichnung prinzipienhaft dargestellten Ausführungsbeispieles wird die Erfindung nachstehend näher erläutert.

In der Zeichnung zeigen

Fig. 1 den Blick in den trommelförmig ausgebildeten Nabenbereich einer Bremsscheibe mit darin eingebauter rein mechanisch betätigbarer Trommelbremse,

Fig. 2 eine teilgeschnittene Ansicht auf die Druckstangenanordnung der Trommelbremse in Richtung des Pfeiles II,

Fig. 3 einen Schnitt entlang der Schnittführung III in Fig. 1.

Die als Feststellbremse für das Fahrzeug dienende Innenbacken-Trommelbremse 3 ist innerhalb des trommelförmig ausgebildeten Nabenteils der nur angedeuteten Bremsscheibe 2 der Scheibenbremse 1 angeordnet, wobei die Innenwandung der Bremsscheibennabe als Bremstrommel 16 fungiert.

Die Trommelbremse 3 stimmt bezüglich ihrer generellen Funktionsweise und ihres konstruktiven Grundaufbaus - abgesehen von ihren i. a. kleineren Abmessungen - mit üblichen Trommelbremsen überein. Sie weist zwei einander gegenüberliegende schwenkbare Bremsbacken 4, 4' auf, die sich mit ihren einander gegenüberliegenden unteren freien Enden an einem ortsfesten Lagerbock 17 abstützen und durch einen schwenkbar am oberen freien Ende der einen der beiden Bremsbacken angelenkten Bremshebel 5 sowie eine mit diesem zusammenwirkende Druckstange 6 auseinandergespreizt und dadurch bremsend an der Innenumfangswandung der Bremstrommel 16 zur Anlage gebracht werden können. Die Druckstange 6 liegt dabei mit ihrem einen Ende am Bremshebel 5 und mit ihrem anderen Ende unter Zwischenschaltung eines an sich bekannten selbsthemmend bemessenen Keilglieds 7 an der Bremsbacke 4 bzw. an einem an deren Bremsbackensteg befestigten Widerlager 18 an.

Durch eine durch Betätigung des Bremsseils 15 o. ä. ausgelöste Schwenkbewegung des Bremshebels 5 um seine Schwenkachse 20 wird also einerseits über die Schwenkachse 20 auf die Bremsbacke 4' und andererseits über die Druckstangen/Keilglied-Anordnung 6/7 auf die Bremsbacke 4 eine beide auseinanderspreizende Betätigungskraft übertragen. Bei nicht betätigtem Bremsseil und dadurch in seiner Ruhelage befindlichem Bremshebel 5 werden die beiden Bremsbacken 4, 4′ in üblicher Weise durch an ihnen angreifende Rückstellfedern 13, 14 in ihre dargestellte Ruhelage gezogen. Dabei wird das selbsthemmend bemessene Keilglied 7 durch die Rückstellfedern einerseits mit der Druckstange 6 und andererseits mit der Bremsbacke 4 bzw. dem daran befestigten Widerlager 18 fest verspannt.

Parallel zur Druckstange 6 ist eine Lüftspieldruckstange 8 angeordnet. Diese ist mit ihrem einen Ende mit Spiel, nämlich dem konstruktiven Lüftspiel $L_k$ an der einen der beiden Bremsbacken, nämlich an der Bremsbacke 4′ angelenkt und sie stützt sich mit ihrem anderen Ende unter Zwischenschaltung eines selbsthemmend bemessenen zweiten Keilglieds 9 an der anderen Bremsbacke, nämlich der Bremsbacke 4 bzw. an einem an deren Bremsbackensteg befestigten zweiten Widerlager 19 ab. Dieses zweite Keilglied 9 wird durch eine an der Lüftspieldruckstange 8 angreifende Federvorrichtung 10 einerseits mit der Lüftspieldruckstange 8 und andererseits mit der benachbarten Bremsbacke 4 bzw. dem Widerlager 19 fest verspannt. Im Ausführungsbeispiel greift die mit ihrem einen Ende an der Lüftspieldruckstange 8 angelenkte, als Schraubenzugfeder ausgebildete Federvorrichtung 10 mit ihrem anderen Ende an der durch die Rückstellfeder 14 gegen die Bremsbacke 4 gespannte Druckstange 6 an; grundsätzlich könnte dieses Federende natürlich auch direkt am Bremsbackensteg bzw. einem der Widerlager 18, 19 der Bremsbacke 4 angelenkt werden.

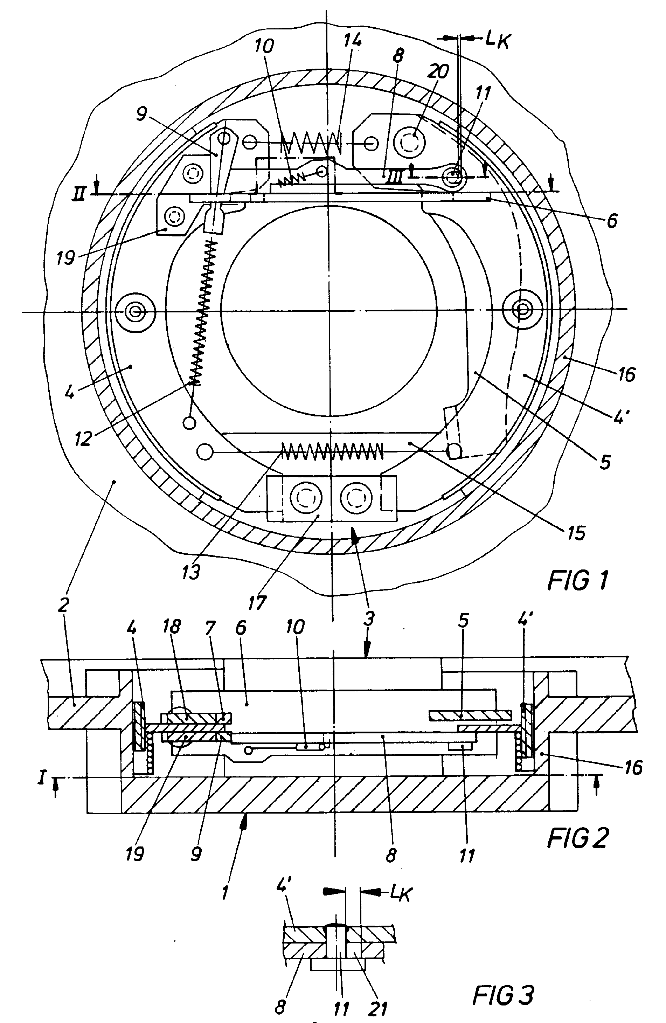

Wie der Schnittdarstellung der Fig. 3 zu entnehmen ist, ist das rechte Ende der Lüftspieldruckstange 8 am Steg der rechten Bremsbacke 4′ angenietet o. ä. In der Lüftspieldruckstange 8 ist dabei ein Langloch 21 angeordnet, welches vom Schaft 11 des Niets mit Spiel durchgriffen wird. Dieses Spiel stellt das konstruktive Lüftspiel der Trommelbremse dar.

Bei nicht betätigter Trommelbremse stützt sich der am rechten Bremsbacken 4′ befestigte Nietschaft 11 unter die Wirkung der Rückstellfeder 14 am linken Rand des Langlochs 21 der Lüftspieldruckstange 8 ab.

Lüftspiel einer Trommelbremse, d. h. ein geringer Abstand zwischen Trommelwand und Reibbelag ist erforderlich, um sicherzustellen, daß die Reibbeläge der beiden Bremsbacken der Trommelbremse im nicht gebremsten Zustand nicht an der Bremstrommel anliegen. Es muß also einerseits so groß bemessen sein, daß dies sichergestellt ist, andererseits aber möglichst klein, damit der Leerweg des Handbremshebels nicht zu groß wird und die erforderliche Haltekraft der Trommelbremse mit dem zur Verfügung stehenden Hebelweg auch sicher aufgebracht werden kann.

Produktionsabweichungen (Fertigungstoleranzen) der einzelnen Bauteile einer Trommelbremse erfordern deshalb bei der neuen Trommelbremse eine Einstellung ihres Lüftspiels. Da sich dieses eingestellte Lüftspiel infolge Belag- und Bremstrommelverschleiß′ während des Betriebes wieder vergrößert, muß das Lüftspiel von Zeit zu Zeit nachgestellt werden.

Durch das aufeinander abgestimmte Zusammenwirken der beiden Keilglieder 7 und 9 mit der Druckstange 6 bzw. der Lüftspieldruckstange 8 wird sowohl das erstmalige Einstellen als auch das betriebsmäßige Nachstellen des erforderlichen Lüftspiels zuverlässig und sehr genau selbsttätig durchgeführt.

Beim Einbauen der Bremse in das Fahrzeug befinden sich die beiden Keilglieder 7 und 9 der in der Scheibenbremse 1 integrierten Innenbacken-Trommelbremse 3 in ihrer in Fig. 1 dargestellten oberen Position. Zur erstmaligen Einstellung der Trommelbremse 3 bzw. deren Lüftspiels bedarf es nur eines einmaligen Anziehens und Wiederlösens des Bremshebels 5 mittels des nicht weiter dargestellten üblichen Handbremshebels des Fahrzeugs. Beim Verschwenken des Bremshebels 5 erfolgt über die Druckstange 6 und das erste Keilglied 7 eine Zustellbewegung der beiden Bremsbacken 4, 4′, d. h. deren beiden oberen Enden werden auseinandergespreizt und die Reibbeläge der Bremsbacken dadurch an der Innenumfangswandung der Bremstrommel 16 angelegt. Bei der Auseinanderbewegung der beiden Bremsbacken 4, 4′ wird die durch die Federvorrichtung 10 fest nach links gegen das zweite Keilglied 9 gezogene Lüftspieldruckstange 8 mit der nach links ausschwenkenden Bremsbacke 4 zunächst mit nach links ausgelenkt; in der Darstellung der Fig. 3 wandert also die Lüftspieldruckstange 8 nach links und der Bremsbackensteg der rechten Bremsbacke 4′ mit dem daran befestigten Nietschaft 11 nach rechts, und zwar so lange, bis das konstruktive Lüftspiel $L_k$ zwischen dem Nietschaft 11 und dem Langloch 21 der Lüftspieldruckstange 8 aufgezehrt ist. Bei anhaltender Zustellbewegung der beiden Bremsbacken 4, 4′ wird die Lüftspieldruckstange 8 daher gegen die Kraft der Federvorrichtung 10 vom zweiten Keilglied 9 nach rechts fortgezogen und dadurch die feste Verspannung zwischen Keilglied 9, Lüftspieldruckstange 8 und Widerlager 19 aufgehoben. Das zweite Keilglied 9 wird infolgedessen durch die an ihm angreifende Federvorrichtung 12, ggf. aber auch bereits allein durch sein Eigengewicht, so weit nach unten gezogen, wie es die weggezogene Lüftspieldruckstange ermöglicht. Wenn die Feststellbremse wieder gelöst wird, kehrt der Bremshebel 5 in seine Ruhelage zurück und die beiden Bremsbacken 4, 4′ werden unter der Wirkung der Rückstellfedern 13, 14 wieder von der Bremstrommel 16 weggezogen und zwar um den Weg des konstruktiven Lüftspiels $L_k$; dann kommt nämlich der im Bremsbackensteg der Bremsbacke 4′ befestigte Nietschaft 11 wieder linksseitig im Langloch 21 der Lüftspieldruckstange 8 zur Anlage (Fig. 3), wodurch ein weiteres Zusammenziehen der beiden Bremsbacken verhindert wird.

Durch das Nachuntenziehen des zweiten Keilglieds 9 wurde die wirksame Länge der Lüftspieldruckstange 8, d. h. der Abstand zwischen der linken Bremsbacke 4 und dem linken Ende des Langlochs 21 der Lüftspieldruckstange 8 gegenüber dem vorherigen Zustand verlängert. Das bedeutet, daß im Zuge der Druckstangen/Keilglied-Anordnung 6, 7 bei in Ruhelage zurückgekehrtem Bremshebel 5 ein gewisses Spiel entsteht. Da die Druckstangen/Keilglied-Anordnung 6, 7 bei in Ruhelage befindlichem Bremshebel 5 druckmäßig entlastet ist, kann das erste Keilglied 7 daher durch eine an ihm angreifende nicht weiter dargestellte und der Federvorrichtung 12 entsprechende Federvorrichtung so lange nach unten gezogen werden, bis der Abstand zwischen den beiden Bremsbacken 4, 4' und der Druckstange 6 bzw. dem ersten Keilglied 7 wieder spielfrei ist.

Während des Betriebes auftretender Belag- und/oder Trommelverschleiß wird später bei jedem Betätigen der Feststellbremse selbsttätig in genau der gleichen Weise ausgeglichen. Wenn nämlich das konstruktive Lüftspiel $L_k$ zwischen Lüftspieldruckstange und Nietschaft infolge Bremsbelagverschleiß' o. ä. aufgebraucht ist, dann wird zunächst beim Anziehen der Feststellbremse das zweite Keilglied 9 nach Aufhebung seiner Verspannung mit Bremsbacke 4 und Lüftspieldruckstange 8 tiefer nach unten gezogen und danach beim Lösen der Feststellbremse das erste Keilglied 7 wieder so lange nach unten gezogen, bis der Abstand zwischen den zuvor an der Lüftspieldruckstange 8 zur Anlage gelangten beiden Bremsbacken 4, 4' und der Druckstange 6 sowie dem ersten Stellkeil 7 wieder spielfrei ist.

Die erfindungsgemäße selbsttätige Nachstellvorrichtung macht die bekannten Vorteile der bei hydraulisch betätigten Trommelbremsen bestens bewährten Keilnachstellung in einfacher Weise auch für solche Trommelbremsen nutzbar, die im wesentlichen nur als Feststellbremsen dienen und deren Bremsbacken ausschließlich über einen auf eine Druckstange wirkenden Bremshebel betätigt werden.

Die Erfindung wurde anhand einer in einer Scheibenbremse integrierten Trommelbremse erläutert. Grundsätzlich ist sie natürlich auch bei anderen Trommelbremsen, die nur mechanisch betätigt werden, mit Vorteil anwendbar.

## Patentansprüche

1. Selbsttätige mechanische Nachstellvorrichtung für eine als Feststellbremse dienende, vorzugsweise in einer Scheibenbremse integrierte Innenbacken-Trommelbremse, deren einander gegenüberliegende schwenkbare Bremsbacken ausschließlich durch einen schwenkbar am freien Ende der einen der beiden Bremsbacken angelenkten Bremshebel sowie eine sich einenends am Bremshebel und anderenends an der anderen Bremsbacke abstützende Druckstange an der Bremstrommelwandung bremsend zur Anlage bringbar sind, gekennzeichnet durch folgende Merkmale:

a) Die Druckstange (6) stützt sich an der Bremsbacke (4) unter Zwischenschaltung eines selbsthemmend bemessenen, federkraftbeaufschlagten ersten Keilglieds (7) ab.

b) Parallel zur Druckstange (6) ist eine Lüftspieldruckstange (8) angeordnet, die einenends mit Spiel (konstruktives Lüftspiel $L_k$) an einer der beiden Bremsbacken (4') angelenkt ist und anderenends unter Zwischenschaltung eines selbsthemmend bemessenen, federkraftbeaufschlagten zweiten Keilglieds (9) am zweiten Bremsbacken (4) abgestützt ist.

c) Das zweite Keilglied (9) ist durch eine an der Lüftspieldruckstange (8) angreifende Federvorrichtung (10) fest mit der Lüftspieldruckstange (8) und der benachbarten zweiten Bremsbacke (4) verspannt.

## Claims

1. Automatic mechanical adjusting device for an internal-expanding-shoe-drum brake acting as a parking brake and preferably integrated into a disc brake and whose pivotable brake shoes, which lie opposite each other, can be brought into braking position against the wall of the brake drum, exclusively by a hinged brake lever pivotable on the free end of one of the two brake shoes and a plunger rod supported by one end on the brake lever and by the other end on the other brake shoe, characterised by the following features:

a) The plunger rod (6) is supported on the brake shoe (4) with the interposition of a self-locking tapered pre-stressed spring powered first wedge piece (7),

b) An air-gap plunger rod (8) is fitted parallel to the plunger rod (6), the air-gap plunger rod (8) is articulated by one end with clearance (constructive air gap $L_k$) to one of the two brake shoes (4') and by the other end is supported on the second brake shoe (4) with the interposition of a self-locking tapered pre-stressed spring powered second wedge piece (9).

c) The second wedge piece (9) is firmly braced with the air-gap plunger rod (8) and the adjacent second brake shoe (4) by a spring device (10) engaging the air-gap plunger rod (8).

## Revendications

1. Dispositif mécanique de réglage de rattrapage automatique pour un frein à tambour à mâchoires intérieures servant de frein de stationnement, de préférence intégré dans un frein à disque, dont les mâchoires de frein opposées, articulées, peuvent être amenées en appui sur la paroi du tambour de frein, de manière à freiner, exclusivement par l'intermédiaire d'un levier de frein articulé de façon pivotante sur l'extrémité libre de l'une des deux mâchoires de frein, et par l'intermédiaire d'une tige de poussée s'appuyant par l'une de ses extrémités sur le levier de frein et, par l'autre extrémité, sur l'autre mâchoire de frein, caractérisé par les particularités suivantes:

a) La tige (6) de poussée s'appuie sur la mâchoire (4) de frein par l'intermédiaire d'un premier coin intercalé (7) conçu de façon autobloquante, soumis à l'action d'un ressort.

b) Parallèlement à la tige (6) de poussée est disposée une tige (8) de poussée à jeu, dont une extrémité est articulée avec un certain jeu (jeu $L_k$ de garde défini par la conception) sur l'une des deux mâchoires (4′) de frein, et dont l'autre extrémité s'appuie, par l'intermédiaire d'un deuxième coin intercalé (9) conçu de façon autobloquante et soumis à l'action d'un ressort, sur la deuxième mâchoire (4) de frein.

c) Le deuxième coin (9) est coincé fermement entre la tige (8) de poussée à jeu et la deuxième mâchoire contiguë (4) de frein, au moyen d'un dispositif (10) à ressort agissant sur la tige (8) de poussée à jeu.

FIG 1

FIG 2

FIG 3